(19) **Europäisches Patentamt European Patent Office Office européen des brevets**

(11) **EP 4 769 236 A1**

(12) **EUROPEAN PATENT APPLICATION**

(43) Date of publication:
01.07.2026 Bulletin 2026/27

(21) Application number: 24223505.9

(22) Date of filing: 27.12.2024

(51) International Patent Classification (IPC):
*G06N 5/022* (2023.01)    *G06N 20/00* (2019.01)

(52) Cooperative Patent Classification (CPC):
G06N 5/022; G06N 20/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Fibabanka Anonim Sirketi**
**34394 Istanbul (TR)**
• **Yildiz Teknik Üniversitesi**
**34220 Istanbul (TR)**
• **University of Jyväskylä**
**40014 Jyväskylän (FI)**

(72) Inventors:
• **SAFAK, ILGIN**
**Ankara (TR)**
• **AKTAS, MEHMET SIDDIK**
**Istanbul (TR)**
• **FRANTTI, TAPIO**
**Oulu (FI)**

(74) Representative: **Yamankaradeniz, Kemal**
**Destek Patent, Inc.**
**Maslak Mah.,**
**Büyükdere Cad., No: 243,**
**Kat: 13, Spine Tower, Sariyer,**
**34485 Istanbul (TR)**

(54) **AN EFFICIENT EMBEDDING SYSTEM AND METHOD USING TWISTOR THEORY AND TIME-BASED SCALING OF EVENT IMPORTANCE FOR BEHAVIOR PREDICTION**

(57) The invention relates to a system and method for developing an efficient embedding methodology that can effectively capture behavior for prediction purposes and could be used in various use cases including, but not limited to, cybersecurity, banking and finance, e-commerce, healthcare, social networking, etc., including predicting future cybersecurity incidents by capturing behavior of IoT devices, capturing intent, or predicting a customer's propensity to use or purchase a product.

EP 4 769 236 A1

**Description**

**Technical Field**

The invention relates to a system and method for developing an efficient embedding methodology that can effectively capture behavior for prediction purposes and could be used in various use cases including, but not limited to, cybersecurity, banking and finance, e-commerce, healthcare, social networking, etc., including predicting future cybersecurity incidents by capturing behavior of IoT devices, capturing intent, or predicting a customer's propensity to use or purchase a product.

**Present State of the Art**

The rapid increase in data volume, together with the rise in devices and users, highlights the essential requirement for effective data representation techniques. As an increasing number of devices connect to the internet and produce substantial volumes of data, conventional storage and processing methods are challenged to maintain adequacy. Effective data representation optimizes storage capacity and improves data retrieval and processing rates, facilitating rapid insights and decision-making. Furthermore, the growing complexity of data kinds and sources need robust representation methods to maintain data integrity and accessibility, hence enabling smooth integration and analysis across many platforms. Effective data representation is essential in multiple domains owing to the exponential increase in data volume and the proliferation of linked devices and people. In healthcare, it facilitates rapid access to patient information for prompt diagnoses. In finance, it facilitates real-time analysis and fraud detection. IoT devices provide substantial data, necessitating effective representation for best performance. Telecommunications gain advantages from enhanced network traffic control. Big data analytics depend on it for revealing trends and insights. Artificial Intelligence (AI) and machine learning (ML) require it for expedited and precise model training. Smart cities utilize it to efficiently manage urban infrastructure. Efficient data representation is crucial for addressing the growing needs of data and devices in contemporary digital ecosystems. To forecast behavior efficiently, it is essential to convert and analyze this data, such as device footprints into structured datasets. Data types used across industries may, e.g., include the following: healthcare uses patient histories and wearable metrics; finance employs transaction histories and market trends; IoT networks assess device fingerprints and usage patterns; telecommunications concentrate on call records and network performance; big data analytics investigate social media activity and e-commerce transactions; AI / ML may leverage training datasets; and smart cities evaluate traffic flow, public transport usage, and utility consumption. Every industry utilizes particular data to comprehend and anticipate behavior, hence improving decision-making and service optimization.

As an example, consider an IoT network. In an IoT network, "device footprint" denotes the whole influence or presence of a device, including its resource consumption (such as bandwidth and electricity), data production, network traffic, and security ramifications. This comprehensive perspective aids in comprehending a device's interaction inside the network and its possible implications for system performance and security. By leveraging device footprints, one can better understand device behaviors and trends and predict their next moves and use this valuable information to enhance the cybersecurity of IoT networks. However, in order to better predict device activities based on the space-time dynamics of their behavior in the network in an efficient way, compact and dynamic representations of device behavior are needed.

In the present state of the art, there are a few approaches an efficient embedding system and method using twistor theory and time-based scaling of event importance for behavior prediction and the following articles have been found: "Dynamic Customer Embeddings for Financial Service Applications" [1]; "DiN Evaluating word embedding models: methods and experimental results" [2]; "Neural Word Embedding as Implicit Matrix Factorization" [3]; "Deepwalk: Online learning of social representations" [4]; "Efficient Estimation of Word Representations in Vector Space" [5]; "GloVe: Global Vectors for Word Representation" [6]; "Graph2vec: Learning Distributed Representations of Graphs" [7]; "Node2vec: Scalable Feature Learning for Networks" [8]; "Struc2vec: Learning Node Representations from Structural Identity" [9]; "Word Embeddings Evaluation and Combination" [10]; "Word Mover's Embedding: From Word2Vec to Document Embedding" [11]; "Word2Vec convolutional neural networks for classification of news articles and tweets" [12]; "Using Graphs for Word Embedding with Enhanced Semantic Relations" [13]; "Deep Inductive Graph Representation Learning" [14]; "Survey on graph embeddings and their applications to machine learning problems on graphs" [15]; "Properties of Vector Embeddings in Social Networks" [16]; "Discriminative Deep Random Walk for Network Classification" [17]; "Network embedding: Taxonomies, frameworks and applications" [18]; "Mining Web User Behavior: A Systematic Mapping Study" [19]; "On the Use of Generative Deep Learning Approaches for Generating Hidden Test Scripts" [20]; "On the Use of Deep Learning Approaches for Extracting Information from Large Scale Graph Data: Case Study on Automated UI Testing" [21]; "On the Large-scale Graph Data Processing for User Interface Testing in Big Data Science Projects" [22]; "Test Script Generation Based on Hidden Markov Models Learning from User Browsing Behaviors" [23]; "Pattern2Vec: Representation of clickstream data sequences for learning user navigational behavior" [24]; "Representation of Click-Stream DataSequences for Learning User Navigational Behavior by Using Embeddings" [25]; "Twistor Algebra" [26]; "Spinors and Space-Time: Two-Spinor Calculus and Relativistic Fields, vol. 1" [27]; "Spinors and Space-Time: Spinor and Twistor Methods in Space-Time Geometry, vol. 2" [28]; "Accelerating the XGBoost algorithm using GPU computing" [29].

Embedding techniques offer a solution to this problem by digitizing data such as events or transactions and converts behavior into numerical representations that can accurately predict their future intentions [1]. Through the use of embedding techniques, it is possible to make sense of behavior and predict, e.g., a user or devices, future actions, thus providing an enhanced overall perspective.

Word embedding techniques are widely used in natural language processing (NLP) and text processing [2], [3]. Word embedding is the representation of words and phrases as vectors. However, there is a paucity of comparative analyses of burial methods in digital footprint studies and embedding methods that consider time-based datasets are insufficient. This patent proposal addresses this shortage of techniques that can accurately represent data such as device footprints or navigational behavior, considering both time and frequency dimensions. To achieve this, a system is proposed that includes a new methodology for creating twistor-based embedding using time- and frequency-based dynamics of data. Using twistor theory, it accurately models changing data, such as network environments and user or device intentions, that are highly dependent on time. An aging factor is used for scaling the embeddings to increase or lower the importance of data on a temporal basis. In many industries, including banking, e-commerce and cybersecurity, capturing time-sensitive user or device interactions is critical for generating accurate recommendations or taking relevant actions. The aging coefficient adjusts embedding vectors by assigning greater weight to recent interactions or events while diminishing the influence of older data. For instance, if a user has shown increasing interest in a product category over the past week, this behavior is embedded with a higher aging coefficient, enhancing prediction accuracy. This adjustment enables the system to better anticipate a user's current preferences or a device's future behavior, improving the personalization of product recommendations, the customer experience or the cybersecurity of the system. The proposed system may use data such as the digital footprints of users or devices, e.g., that are generated while navigating a website, mobile application, or in an IoT network, etc.

Over time, embedding techniques have evolved and branched into subfields such as word embedding, which includes Word2Vec and Glove, and graph embedding, which includes DeepWalk, Graph2vec, Node2Vec, and Struct2vec [4], [5], [6], [7], [8], [9]. Word embedding is a powerful tool used in natural language processing (NLP) that enables vector representation of words in a corpus, capturing both semantic and syntactic meaning [2]. This technique enables similarity analysis, speech tagging, clustering, and syntactic parsing in NLP applications [10]. Word embedding has facilitated numerous analyses and predictions in supervised, semi-supervised, and unsupervised ML algorithms by converting words into vectors [2]. The Word2Vec model consists of two approaches: Continuous Bag of Words (CBoW) and Skip-gram [11]. CBoW predicts a given word by analyzing its neighbor words, converting them into single hot-coded vectors, and feeding them into a neural network, using the predicted word as the output. In contrast, Skip-gram predicts neighboring words around a given word, converted into a single hot-coded vector, and used as input to the neural network, with neighboring words predicted as output [11], [12].

Graph embedding is a technique that uses graphs to represent nodes as vectors in a low-dimensional space, as opposed to word embedding. Graph-based embedding is useful in a variety of applications, including node classification and ensemble detection [13]. This approach involves computationally intensive eigenvalue decomposition techniques to obtain embeddings [14]. Graph embedding methods are powerful techniques that effectively solve problems related to social networks and community detection. These methods help to create vectorized features for graph attributes such as nodes, edges, and subgraphs [15]. Some common graph embedding methods are: Node2vec, DeepWalk, Struc2vec, Graph Convolutional Networks (GCNs), GraphSAGE, LINE, and TransE. Node2vec generates random walks on a diagram and uses a skip-gram model to learn node embeddings from the generated walks. Similarly, DeepWalk generates random walks on a diagram, but instead of a skip-gram model, it uses a neural network to learn node embeddings. GCNs use a convolutional neural network (CNN) architecture to learn node embeddings by aggregating the properties of neighboring nodes. GraphSAGE extends the idea of GCN by using a differentiable aggregator function to combine the properties of neighboring nodes. LINE preserves local and global network structures by optimizing the first- and second-order affinities of nodes, while TransE is a method for embedding routed graphs that uses a translation-based scoring function to learn embeddings.

DeepWalk is a popular and effective graph embedding technique that has been developed recently [14]. This technique preserves higher-order proximity, maximizing the probability of tracking the last node and subsequent nodes on each random walk [16]. It works in two phases: The first stage involves randomly circulating near neighbors and creating random walks in the diagram to optimize embedded representations of nodes [17]. In the second stage, the Word2Vec Skip-gram algorithm is applied to each generated walk to vectorize nodes. DeepWalk is applied to successful word embedding to adjust the nodes in such a way that the frequency of occurrence of pairs in short random walks is maintained [14]. DeepWalk graph representations, such as Hierarchical Softmax, which uses the Huffman binary tree as an alternative representation of vocabulary, have different applications [18]. DeepWalk has been successfully used in many applications, such as community detection, link prediction, and recommendation systems [14], [19].

Struc2Vec is a graph embedding method that has attracted attention recently [10]. Struc2Vec is designed to capture the structural information of a graph by taking advantage of node-to-node structural similarity. The basic idea behind Struc2Vec is to define a set of context nodes for each node in the diagram based on the structural similarity between the nodes. This context nodes are then used to train a skip-gram model to learn node embeddings. To calculate the context nodes of a given node, Struc2Vec uses a random walk strategy. Struc2Vec performs multiple random walks of a fixed length, starting from each node in the diagram. The resulting random walks create a context tree for each node. The context tree represents the structural similarity of the node and its neighbors based on observed random walks. Once the context trees are created, Struc2Vec uses them to create context nodes for each node in the diagram. Context nodes are nodes that most closely resemble a given node based on context trees. Specifically, context nodes are defined as nodes that most closely resemble a given node, depending on the paths shared between the respective context trees. The resulting context nodes are then used to train a skip- gram model to learn node embeddings. The skip-gram model is trained to predict the context nodes given the target node, and the learned embeds are used as final node representations. Overall, Struc2Vec is a powerful method for graph embedding, which is particularly effective for capturing the structural information of a graph [10].

Various embedding methodologies have been proposed and reviewed in the literature [19]. There are studies that use word-based embedding techniques [20], [21], [22], [23] to understand user behavior and create graphical customer interface test scripts. Furthermore, pattern-based embedding approaches [24], [25] are widely used to analyze users' browsing behavior. However, in this study, we mainly focus on space-time based embedding strategies to better understand device behavior. In addition, this invention proposes a new, efficient embedding technique for predicting user or device behavior based on twistor theory.

Utilizing twistor theory to represent user/device data through space-time entails employing the mathematical structure of twistors to encode space-time dependent information inside a higher-dimensional framework. Twistor theory, established by Roger Penrose, translates space-time events into a complicated projective space known as twistor space. This mapping converts the geometric characteristics of space-time into algebraic attributes in twistor space, enabling the examination of intricate physical events. In twistor theory, each time point is treated as a distinct dimension in twistor space in order to represent temporal data using multidimensional time. This enables capturing the progression of a system over time within a higher-dimensional framework [26], [27], [28].

Various patent applications that are similar to the invention are summarized below;

As a result of research in the literature, a US patent application with the application number "US11106789B2" and entitled 'Dynamic Cybersecurity Detection of Sequence Anomalies', a technique for identifying abnormal sequences in user sessions using heuristic extraction of event sequences, facilitating behavior analysis without the need for user identity or session identifiers is described. Events are retrieved according to quantitative or temporal limitations, thereafter, transformed into vectors and embedded within a vector space. An ML model evaluates the resemblance of a candidate sequence to a designated history to calculate an anomaly score. The history may be confined to particular IP addresses or time intervals without necessitating model retraining. Anomalous sequences may initiate alarms, investigations, automatic mitigations, or other cybersecurity measures, thereby improving the efficacy of detecting and addressing atypical behavior patterns. However, the communications patterns between nodes, including transmitted data volume, frequency and duration of communications are not utilized for next action prediction. Additionally, an efficient embedding method for representing space-time interactions is also not used.

As a result of research in the literature, a US patent application with the application number "US10880321 B2" and entitled 'Method and System for Learning Representations of Network Flow Traffic' defines a system for acquiring embeddings of network flow traffic. It analyzes network traffic data via a deep-learning framework that embeds the data into a vector space. This method improves the capacity to examine and interpret network traffic patterns by converting the data into significant numerical representations. The embedding method employed is a deep-learning architecture intended to learn and embed network flow data into a vector space. The system detects anomalies; however, it does not predict a user's/device's next action using the anomaly findings, nor does it suggest an efficient embedding method.

As a result of research in the literature, a US patent application with the application number "US9998491 B2" and entitled 'Forecasting and Classifying Cyber-Attacks Using Neural Embeddings Based on Pattern of Life Data' outlines a method for predicting and categorizing cyber-attacks via neural embeddings derived from pattern of life (POL) data. POL denotes the customary behaviors and routines of individuals or groups, frequently examined to comprehend and anticipate future activities. The procedure entails generating a set of POL and question and answer feature vectors, introducing noise to produce a secondary set, then combining the vectors to create a tertiary collection. A forecasting setup ages the POL feature vector to predict future values, which are subsequently input into a trained neural network to assess the likelihood of a cyber-attack occurring at a future time. The approach uses neural embeddings to improve the precision of cyber-attack forecasts. However, an efficient embedding approach for representing inter-device interactions in space-time based on their communication patterns is not described.

As a result of research in the literature, a US patent application with the application number "US11716266B2" and entitled 'Network Security Monitoring and Correlation System and Method of Using Same' describes a network security monitoring and correlation system that provides a three-dimensional visualization of network traffic, overlaid with security alerts and other relevant data. The system includes an application server linked to a client. The server retrieves network traffic metadata and relevant data about individual computer hosts and connections, processes this data into a graph structure, and embeds additional information within this structure. The client then creates a 3-D visualization of the network environment, displaying hosts and connections, and overlays the additional information using various visual cues like color, shape, size, position, or dynamic values. This visualization helps in monitoring and correlating network security events effectively. However, this method is not used for predicting a user's/device's next action using efficient space-time embedding methods.

As a result of research in the literature, a US patent application with the application number "US11031135B2" and entitled 'Determination of Cybersecurity Recommendations' outlines a method for ascertaining cybersecurity suggestions through the analysis of network traffic and process monitoring data. The system employs multidimensional nonlinear manifold clustering on dataset elements, allocates a threat entity to a cybersecurity threat hyper-volume according to this clustering, and devises recommended actions based on the allocation. The patent does not use embedding techniques for data vectorization.

As a result of research in the literature, a US patent application with the application number "US9990687B1" and entitled 'Systems and Methods for Fast and Repeatable Embedding of High-Dimensional Data Objects Using Deep Learning With Power Efficient GPU And FPGA-Based Processing Platforms' describes systems and methods for generating embeddings of high-dimensional data objects using deep learning techniques on power-efficient GPU and FPGA-based processing platforms. The process involves initially creating formal embeddings using traditional techniques, then designing a deep embedding architecture, which includes selecting inputs, outputs, layers, units, nonlinearities, and pooling types, typically within a convolutional neural network. A training strategy is developed, and the architecture's parameters are tuned to reliably reproduce the initial embeddings. The trained architecture can then be deployed to embed new high-dimensional data objects into the same space, and these embeddings can be used in various applications. This approach aims to simulate and surpass prior embedding algorithms in performance. However, it does not utilize this embedding method for predicting a user's/device's next action based on inter-device communications patterns.

As a result of research in the literature, a US patent application with the application number "US11227012B2" and entitled 'Efficient Generation of Embedding Vectors of Nodes in a Corpus Graph' defines a system for the efficient generation of embedding vectors for nodes inside a corpus graph. A corpus graph is a systematic representation of data in which nodes signify entities and edges denote the interactions among these things. The input data for the graph generally comprises diverse information pertinent to the entities and their interactions. In a network security setting, nodes may signify devices or users, while edges may denote communication or data transfer events between them. The procedure entails allocating tasks between central processing units (CPUs) and graphic processing units (GPUs). CPUs ascertain the pertinent neighborhood of nodes for a designated node inside the corpus graph. The data is subsequently transmitted to GPUs, which compute the consolidated embedding vector for the target node utilizing information from its pertinent vicinity. The allocation of tasks between CPUs and GPUs improves the efficacy of producing embedding vectors. However, these embeddings do not take into account the temporal aspects of data with an aging method as described in this invention.

As a result of research in the literature, a US patent application with the application number "US005646997A" and entitled "Method and Apparatus for Embedding Authentication Information with Digital Data" relates to an authentication system for digital information in which the data is embedded in the bitstream by modifying the original bitstream. It uses embedding for authentication purposes only and does not provide an efficient method for embedding space-time data or predict a user's/device's next action by analyzing device behavior.

As a result of research in the literature, a US patent application with the application number "US20170270100A1" and entitled "External Word Embedding Neural Network Language Models" provides a mechanism for neural network language models of external word embedding in a data processing system. The mechanism configures the data processing system with an external word-embedded neural network language model that accepts a sequence of words as input and predicts a valid word based on the sequence of words. However, it does not consider embedding space-time data or taking into account time-sensitive data, nor does it predict the user's/device's next action.

As a result of research in the literature, a US patent application with the application number "US009659560B2" and entitled "Semi-Supervised Learning of Word Embeddings" is about a software that trains an artificial neural network to generate vector representations for natural language text. This software takes a set of natural language texts for use in education or generates a set of metadata using supervised/unsupervised learning methods. However, the proposed software does not embed space-time data or predict the next action by analyzing device behavior.

As a result of research in the literature, a US patent application with the application number "US2012O310627A1" and entitled "Document Classification With Weighted Supervised N-Gram Embedding" involves embedding n-grams from an input text into a hidden space for document classification, embedding the input text in a hidden space based on embedded n-grams, and weighting said n-grams relative to the spatial evidence of the relevant n-. However, it does not embed space-time data and only deals with document classification and does not predict a user's/device's next action by analyzing device behavior.

As a result of research in the literature, a US patent application with the application number "US007620565B2" and entitled "Customer-Based Product Design Module" is related to a system that provides personalized products or services. The system collects information from the user, analyzes it, and leverages new pre-programmed interactions from the vendor for future interactions with the user. Here, the customer is provided with a customized service, but the future interaction options in the method used have static values. Time-sensitive data is analyzed with AI techniques to predict the user's next action; however the space component is not considered.

As a result of research in the literature, a US patent application with the application number "US010489792B2" and entitled "Maintaining Quality of Customer Support Messages" relates to a system that maintains the service quality level of the messages sent to customers by the customer representative. Messages are exchanged by embedding words with a neural network and forwarded to the customer. However, it does not suggest a space-time embedding method and only deals with improving the messages delivered to the customer and does not predict a user's/device's next action by analyzing device behavior.

As a result of research in the literature, a US patent application with the application number "US010909459B2" and entitled "Content Embedding Using Deep Metric Learning Algorithms" deals with training a neural network with a set of documents to create embedded space. However, time-sensitive data is not used to predict a user's/device's next action.

As a result of research in the literature, a US patent application with the application number "US20200057946A1" and entitled "Techniques for Building a Knowledge Graph in Limited Knowledge Domains" relates to techniques for creating a knowledge graph customized for a specific knowledge domain (for example, for a specific customer or a specific bot) based on a small user dataset and large scale. Knowledge diagrams can be used, for example, in search, question answering, conversational interfaces (e.g., chatbots), recommender systems, and so on. The customized knowledge graph can be used, for example, to improve intent classification in a chatbot based on knowledge graph embedding techniques. However, it does not suggest a space-time embedding method and time-sensitive data is not used to predict a user's/device's next action.

As a result of research in the literature, a US patent application with the application number "US01 1216510B2" and entitled "Processing an Incomplete Message With a Neural Network to Generate Suggested Messages" involves processing the text of an incomplete message entered by the user using a neural network and word embedding technique to suggest messages similar to the message the user is entering. However, a space-time embedding method is not suggested; only the content of the next message is predicted, and the next action of the device is not predicted using time-sensitive data.

As a result of research in the literature, a US patent application with the application number "US010650311B2" and entitled "Suggesting Resources Using Context Hashing" allows messages exchanged between users to be processed to suggest a source to a user. For example, the first user might be a customer representative assisting a customer, and suggested resources might include the text of a message to be sent to the customer. Resources can be suggested by calculating the semantic representation of messages in the session, calculating a context vector that defines the context of the session, calculating the vector of providing a context from the context vector, and retrieving one or more resources from a data store. The proposed structure includes AI-based word or resource embedding methods. However, space or time-sensitive data is not used to predict the user's/device's next action.

As a result of research in the literature, a US patent application with the application number "US11042922B2" and entitled "Method and System for Multimodal Recommendations" describes a method for generating a product recommendation based on zero-shot learning and multimodal knowledge graph representation in a retail system. Relationships between a large number of products and customers are created and stored in an infographic. A representation of the quality and relationship between the large number of products and customers stored in the knowledge graph is learned and used to recommend products to the customer. However, the system described in the patent only makes product recommendations and does not predict a user's/device's next action by using space and time-sensitive data as proposed in this invention.

As a result of research in the literature, a US patent application with the application number "US11328221 B2" and entitled "Hybrid Model for Short Text Classification With Imbalanced Data" is related to a system that classifies short text with unbalanced data. Applies the weights of the regression layer to the text embedding vector to create an embedding vector representing a text sample and a data model output vector. Data model output vectors are assigned a specific classification label to the text sample based on its weight value. Therefore, the patent relates only to the short writing classification and does not predict a user's/device's next action using space and time-sensitive data, as in this patent proposal.

As a result of research in the literature, a US patent application with the application number "US20210201338A1" is about collecting customer experience analytics data in a contact center and creating a customer model of customer behavior according to the collected customer experience analytics data using techniques such as deep learning, thus predicting customer behavior. By predicting customer behavior, the customer's future interaction can be used by the customer representative to take appropriate action. However, space and time-sensitive data is not used to predict a user's/device's next action.

And, in the "Customer Journey Prediction and Resolution" entitled and US10755293B2 numbered U.S. patent, customer journey prediction and resolution are performed through a predictive model in which each user is mapped to all existing user journey information corresponding to a specific job. The predictive model is analyzed to understand the characteristics and preferences of the services that the user subscribes to, and the lowest-effort solution for the user. The predictive model is analyzed to predict personalized services. By providing continuous feedback and performance improvement, the system automatically optimizes itself. However, space and time-sensitive data is not used to predict a user's/device's next action, as is proposed in this invention.

In a US patent number "US20230017304A1" entitled 'Tool for Facilitating Efficiency In Machine Learning', a method for efficiently allocating resources to deep learning autonomous machines is described. It offers an energy-aware communication library for neural network applications, reducing power and electricity consumption in data centers and clusters. This involves identifying data sets and implementing a library to optimize frequency scaling on a computing hardware, while maintaining high performance. However, device and network data are not used to predict a user's/device's next action, as is proposed in this invention.

The system described in US patent number "US009405348B2" and entitled 'System and Method for Managing Energy Consumption in a Compute Environment', performs power cap processing in a compute environment. It assesses whether the allocated and dedicated resources for a task exceed a specified threshold value. If this is the case, the system interrupts the processing by transferring the task to alternative resources and takes measures to decrease power consumption. However, an efficient method for predicting a user's/device's next action is not considered.

The US patent application number "US20170214701 A1" and entitled "Computer Security Based on Artificial Intelligence" describes an end-to-end AI based security system including threat detection, information management, code obfuscation, and infrastructure protection. However, it does not suggest an efficient embedding method for space-time data in predicting a user's/device's next action.

As seen from the technical problems in the present state, an efficient embedding system and method using twistor theory and time-based scaling of events is needed.

As a result, due to the inadequacy of the solutions to meet above mentioned needs, it was necessary to make a development in the relevant technical field.

## The Purpose of the invention

The invention is inspired by present situations and aims to solve above mentioned disadvantages.

The main purpose of the invention is to provide an efficient embedding system and method using twistor theory and time-based scaling of events.

Another purpose of the invention is that can effectively capture behavior for prediction purposes and could be used in various use cases including, but not limited to, cybersecurity, banking and finance, e-commerce, healthcare, social networking, etc., including predicting future cybersecurity incidents by capturing behavior of IoT devices, capturing intent, or predicting a customer's propensity to use or purchase a product.

The structural and characteristic features of the invention and all its advantages will be understood more clearly thanks to the figures given below and the detailed description written with reference to these figures and therefore the evaluation should be made considering these figures and detailed description.

## Figures to Help Understanding of the Invention

Figure 1 is a representative view of an efficient embedding system using twistor theory and time-based scaling of event importance for behavior prediction system which is subject of the invention.
Figure 2 is a graph representation of example IoT network.
Figure 3 is an overview of the subject of the invention.

## References List

100. Client
101. Router

102. Server
200. Communications module
201. Embedding Database
202. User Database
203. Device database
204. AI/ML Database
205. Memory
206. Embedding Module
207. Weighting Module
208. Data Analytics Module
209. Graph Module
210. Monitoring and Logging Module
211. User Management Module
212. Device Management Module
213. Rules Engine
214. Processing module
215. Verification Module
216. Transmitter device
217. Receiver device
218. Management Module
A. Node/device
B. Node/device
C. Node/device

**Detailed Description of the Invention**

The invention relates to a system and method for developing an efficient embedding methodology that can effectively capture behavior for prediction purposes and could be used in various use cases including, but not limited to, cybersecurity, banking and finance, e-commerce, healthcare, social networking, etc., including predicting future cybersecurity incidents by capturing behavior of IoT devices, capturing intent, or predicting a customer's propensity to use or purchase a product.

This invention leverages the aging method described in our previous patent application entitled 'Word and Graph Based Distributed Embedding System Based on Aging Factor and Visit Frequency in Digital Footprints for User Behaviour Prediction', Fibabanka, Turkish Patent Office application no. 2023/006691, June 2023.

The following elements are used in the invention:

A client (100) that represents a user device, such as a computer, smartphone, or tablet and initiates requests for data or services from the network;

A router (101) that directs data traffic between the client (100) and the server (102), ensures that data packets are sent to the correct destination and can also connect the network to other networks, such as the internet and based on capability and configuration, that can also perform the entirety or subset of the functionalities of the server (102);

A server (102) that provides resources, data, or services to the client (100) and performs prediction of device / user behavior using the proposed embedding process and that can be a web application server (102), database server (102), quantum computer or any other type of server (102) that responds to client (100) requests;

Communications module (200) that responsible of all internal communications in the server (102);

Embedding database (201) in the server (102) that stores embedding data, including at least embedding matrices of the user, device and/or network and weighting data;

User database (202) in the server (102) that stores data related to the user, including at least user data, user profile and analysis models;

Device database (203) in the server (102) that stores all data related to the clients (100), including device profiles and analysis models, including at least device fingerprint data, device profile and analysis models;

AI/ML database (204) that used for the storage, management, and retrieval of substantial data volumes utilized in the training, testing, validation and deployment of AI/ML models and that enables efficient data processing, scalability, and integration with the monitoring and logging module (210) and data analytics module (208) to enhance advanced analytics and model creation;

A memory (205) that stores data related to activities performed in the system, including prediction, mapping of the graph to the network, network data and data analytics;

Embedding module (206) that performs all activities related to embedding of data, including applying the proposed twistor-based embedding technique to the pre-processed data to represent user/device behavior in a high-dimensional vector space, normalization of the embedding vectors, and dimensionality reduction of the embedding vectors;

Weighting module (207) that performs all weighting operations in the system, including for obtaining weighted embedding vectors during the embedding phase and for performing aging transformation on the on embedding datasets to give more weight to recent events/transactions/interactions, etc. representing the users'/devices' behaviors;

Data analytics module (208) that performs all data analytics activities in the system, including AI/ML model generation and analysis of user/device behavior;

Graph module (209) that employs graph theory to depict entities (including devices, data points, web pages, or user activities) as nodes, with the relationships or interactions among them shown as edges and determines the weights of the edges and stores them in the embedding database (201) and that generates directed graphs for the investigation and visualization of complex data flows and interconnections, e.g., of IoT networks and user navigational behavior;

Monitoring and logging module (210) that continuously monitors the system and logs data, includes multipoint (sensors distributed) online traffic monitoring in communications network, including IoT nodes and that logs data in a relevant database or memory (205);

User management module (211) that facilitates the creation, modification, and deletion of user accounts, in addition to overseeing user authentication, authorization, and access control inside an application or network and that guarantees the secure and effective administration of user data and permissions and used for managing user profiles and models obtained with the data analytics module (208);

Device management module (212) that responsible for the registration, configuration, monitoring, and maintenance of devices inside a network and guarantees that devices are effectively managed, updated, and secured, promoting seamless operation and communication inside the network and used for managing device profiles and models obtained with the data analytics module (208);

Rules engine (213) that applies rules and policies applicable to user, devices, and network based on the configuration provided by the management module (218);

Processing module (214) that performs all processing activities in the system, including data processing, etc.;

Verification module (215) that performs all verification functionalities in the system including data verification, request verification, user identity, participant or device verification. Data verification includes data gathering, integration, verification, storing, provisioning, and presentation;

Transmitter device (216) is a device (e.g., NFC/RFID reader, API gateway, IoT gateway, network router (101), switch, etc.) that transmits data to external systems;

Receiver device (217) is a device (e.g., NFC/RFID reader, API gateway, IoT gateway, network router (101), switch, etc.) that receives external signals sent to the system;

Management module (218) that is used in managing the entire system, e.g., by a network administrator via a user interface, including network configuration, device configuration, network access rights, etc.

This invention relates to the development of an efficient embedding methodology that can effectively capture the behavior for predication purposes and could be utilized in various use cases including, but not limited to, cybersecurity, banking and finance, e-commerce, healthcare, social networking, etc. including predicting future cybersecurity incidents by capturing IoT device behavior, capturing intent, or the predicting the propensity of a customer using or purchasing a product. To achieve this goal, a system that optimizes the representation and use of available data for forecasting future behavior is proposed. A new embedding system based on twistor theory is described that takes advantage of the space-time dynamics of data, such as device footprints created in an IoT network or customer online browsing behavior, to accurately represent behavior. Graph theory is used to map the inputs, e.g., an IoT network nodes or web pages, to a directed, weighted graph. As an example, network nodes may be represented as nodes in the graph, connectivity between nodes may be represented as edges and inter-node communication patterns may be represented as the weights of edges. In another example, web pages may be represented as the nodes of a graph, edges may represent the sequence in which pages can be visited, and customer page visit related patterns, such as visit frequency, or duration may be used as the weights of the edges.

The system uses a new, efficient embedding algorithm based on twistor theory and graph theory and combines the aging factor, to determine the overall behavior based on inputs or events, e.g., communication frequency, duration and volume of data transferred between network nodes or page visit duration, page visit frequency, etc., to enhance the embedding impressions generated. The proposed aging method performs time-based scaling to give less importance to older data and more important to newer data, where the average behavior is compared to recent behavior to make a prediction about intent. Thus, even with limited historical and contextual data available, it is possible to make accurate predictions about the intention, e.g., of a device or user. By representing the input (e.g., IoT network, web pages, etc.) as a graph and employing twistor theory to depict temporal data as embedding vectors, the algebraic and geometric methodologies of twistor theory can be utilized to more effectively represent the dynamic data. This method offers a multidimensional representation that encompasses both the spatial and temporal dynamics.

This invention proposes a method and system for applying twistor theory for embedding data to efficiently represent complex data structures, events, transactions or relationships. Conventional embedding strategies seek to diminish data dimensionality to enhance manageability and computational efficiency. Twistor theory, conversely, projects data into a higher-dimensional realm, which may initially appear counterintuitive. The primary benefit of employing twistor theory is its capacity to convert intricate geometric and algebraic interactions into more straightforward representations within this higher-dimensional space. Twistor theory offers a robust paradigm for data embedding by first augmenting dimensionality to elucidate complex relationships and subsequently condensing it to a more manageable form. This method utilizes the advantages of both high-dimensional representation and efficient processing, potentially rendering it more successful than conventional embedding techniques for specific data types. Twistor theory can be utilized to enhance embedding efficiency as follows:

- Higher-Dimensional Embedding: Data is first mapped onto a higher-dimensional twistor space. This captures complex device relationships and interactions that may be challenging to depict in reduced dimensions using traditional embedding methods.
- Simplification of Relationships: Geometric and Algebraic Simplification: In twistor space, specific geometric and algebraic procedures are rendered more straightforward. Complex relationships in space-time can be depicted as linear operations in twistor space.

- Dimensionality Reduction: Following the utilization of the higher-dimensional representation to elucidate the relationships, the data may optionally be projected into a lower-dimensional space. Methods such as Principal Component Analysis (PCA) or t-Distributed Stochastic Neighbor Embedding (t-SNE) may be employed for this purpose.
- Efficient Computation: The streamlined interactions in twistor space facilitate enhanced computational efficiency. Computationally intensive operations in the original space can be executed more effectively in twistor space and subsequently mapped back.
- Utilization of Specialized Hardware: Employing power-efficient Graphics-Processing Units (GPUs) and Field Programmable Gate Arrays (FPGAs) can significantly improve computing efficiency. These hardware architectures are specialized for parallel processing, advantageous for managing high-dimensional data.

As an example, consider representing an IoT network using twistors to obtain embeddings as follows:

- Represent IoT Data as Space-time Points: Treat each data point from an IoT device as a point within a higher-dimensional spacetime continuum. Denote each data point as (x, y, z, t), where (x, y, z) indicate spatial coordinates and t signifies time.
- Complexification: Transform these real coordinates into complex values. For instance, if $d_i$ denotes the data from device i, we can articulate: $Z_i = x_i + iy_i$ and $W_i = z_i + it_i$.
- Twistor Coordinates: Specify the twistor coordinates for each data point of the device. In twistor theory, these coordinates are typically expressed as a pair of complex integers or as a four-component entity in projective twistor space:

$$T_i = (Z_i, W_i) = (x_i + iy_i, z_i + it_i)$$

- Graph Representation of the Network: The IoT network can be represented as a graph (G = (V, E)), where V is the set of devices (nodes) and (E) is the set of connections (edges) between them. Each node $i$ has a corresponding twistor $T_i$.
- Twistor Network Matrix: The entire network can be represented in a matrix form, where each row corresponds to a device's twistor coordinates. If there are N devices in the network, the matrix T can be written as:

$$T = \begin{bmatrix} Z_1 & W_1 \\ Z_2 & W_2 \\ \vdots & \vdots \\ Z_N & W_N \end{bmatrix}$$

- where $Z_i$ and $W_i$ are the twistor coordinates for device $i$.
- Adjacency Matrix: To represent inter-device connections, an adjacency matrix $A$ can be used, where $A_{ij}$ indicates the presence and weight of a connection between device i and device j:

$$A = \begin{bmatrix} 0 & A_{12} & \cdots & A_{1N} \\ A_{21} & 0 & \cdots & A_{2N} \\ \vdots & \vdots & \ddots & \vdots \\ A_{N1} & A_{N2} & \cdots & 0 \end{bmatrix}$$

The adjacency matrix could, e.g., represent data such as data volume exchanged, throughput, communication frequency and duration in inter-node communications.

• Weighted Twistor Representation of the Network: The twistor and adjacency matrices are then multiplied to obtain a new matrix that represents the transformed twistor coordinates based on the network's connectivity:

$$T' = T^T A = \begin{bmatrix} Z_1 & W_1 \\ Z_2 & W_2 \\ \vdots & \vdots \\ Z_N & W_N \end{bmatrix}^T \begin{bmatrix} 0 & A_{12} & \cdots & A_{1N} \\ A_{21} & 0 & \cdots & A_{2N} \\ \vdots & \vdots & \ddots & \vdots \\ A_{N1} & A_{N2} & \cdots & 0 \end{bmatrix}$$

This matrix could then be utilized as the embedding matrix representing the network.

• Dimensionality Reduction: Optionally, the embedding matrix could be simplified into a lower dimensional matrix using a method such as PCA, which determines the directions (principal components) that optimize variance in the data. The PCA projection matrix consists of the eigenvectors associated with the greatest eigenvalues of the data's covariance matrix. First, the covariance matrix is calculated as:

$$\Sigma = \frac{1}{N-1} T'^T T'$$

Then eigenvalue decomposition is performed on the covariance matrix to obtain:

$$\Sigma = V \Lambda V^T$$

where $V$ is the matrix of eigenvectors and Λ is the diagonal matrix of eigenvalues. Then, to form the projection matrix $P$, the top $k$ eigenvectors are chosen. This determines the dimensionality of the subspace onto which the original data is projected. For example, if it is desired to reduce the dimensionality to 2, $k$ is taken as 2. It is recommended to choose $k$ based on the explained variance to balance dimensionality reduction and information retention. The original matrix is then projected onto the lower-dimensional subspace:

$$\tilde{T} = T' P$$

• Best practices are that the data is normalized before applying PCA to avoid bias due to different scales of features.

In an example regarding e-commerce, input such as time spent on product pages, page visit frequency, and data volume of viewed content, could be utilized to obtain the twistor based embedding vector. In this case, the adjacency matrix could contain coefficients to represent the relative importance of page visit frequency, time spent, and data volume in the embedding vector. These coefficients could be dynamically adjusted to align with current user trends. This approach ensures that high-frequency and long-duration interactions contribute more significantly to the embedding vector, while past activities are weighted less to enhance the prediction of recent behaviors.

It is to be noted that the proposed embedding method can be utilized even if space data, such as geolocation/coordinates of a user/device or distance of a user/device from another devices/server (102), etc. is not known. For example, user/device interactions could be mapped to a graph, and the nodes on the graph could be given cartesian coordinates to obtain the space component of the nodes. This could better capture user/device behavior by providing a node a relative distance to other nodes based on their interactions.

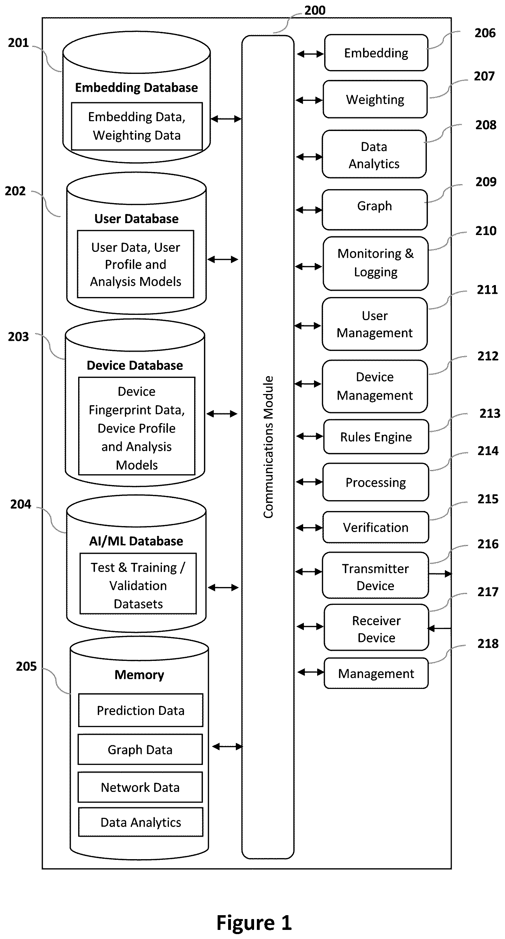

The solution presented in the patent includes several stages, including an embedding framework, which includes data pre-processing, embedding, post-processing, and prediction stages. The framework takes data, such as device footprints in an IoT network, customer digital navigational behavior, etc., as input. The raw data goes through the pre-processing stage and is cleaned by removing irrelevant features. The cleaned data is then fed into the embedding stage, where a twistor-based embedding technique is applied to represent behavior in a high-dimensional vector space. Normalization is performed on the embedding vectors. Optionally, dimensionality reduction can be performed to lower the dimensions of the embedding vectors, thereby the complexity. In the post-processing phase, the embeddings can be further processed to eliminate noise and improve the quality of the embedding. Finally, the resulting embeddings are used in the forecasting phase to predict user/device behavior and/or preferences. Using this framework, we can better represent device/user footprints and learn about their behavior, which can be used to improve the existing system that generated the input data. The framework consists of multiple stages (see Figure 1).

In the pre-processing phase, data cleaning and data labelling is performed. Additionally, to replace missing data, methods such as data imputation may be employed, wherein gaps are filled with estimated values derived from statistical methods or ML models to preserve data integrity and analytical precision. Relevant factors for embedding are determined, such as the frequency, throughput, amount of time spent, and data volume transmitted when a device communicating with other nodes is calculated. When working with smaller labeled datasets in supervised ML, one technique that can be used is data augmentation. This involves creating new training instances from existing ones by applying various transformations. In the case of data pre-processing, the proposed framework converts the raw input data, such as device fingerprints or users' browsing behaviors from log files, into time-based sequences, such as time-ordered user page navigation or inter-device communications sequences. In the embedding phase of the proposed embedding system, the pre-processed are mapped to a graph and a twistor-based embedding method is applied. The post-processing phase involves creating embedding vectors using time-based weighting and normalization techniques based on twistor components in the embedding vector, e.g., data volume, throughput, duration and frequency of inter-node communications or page visit frequency, duration of page visit, etc. For example, in e-commerce, user interactions such as page visit frequency and time spent on product pages are key metrics for predicting user preferences. Unlike traditional methods that normalize frequency and duration separately, the proposed approach leverages an integrated normalization through the twistor structure. By simultaneously accounting for both metrics, it reduces dimensional complexity and improves computational efficiency. This integrated method allows faster processing of high-dimensional data generated by frequent page visits and time spent on products, enabling real-time personalization without significant computational overhead

This patent proposal proposes an embedding system that uses a combination of graph theory and twistor theory for embedding data into twistor-based vectoral representations of data. The embedding vectors are scaled using a time-based method called aging. The proposed method may be used in different use cases, such as to capture the tendencies of IoT devices performing a cybersecurity attack, or the tendencies of customers using or buying a product. In one embodiment, the proposed embedding method may use data such as the duration, frequency, data volume, and latency of inter-node communications, or other measures such as distance and between nodes in the IoT network as input to twistor components. In another embodiment, session duration, frequency of web pages visited, time spent on a web page may be used as input to twistors.

In the post-processing phase, twistor vectors are normalized by their respective twistor components which may include factors such as frequency, data volume, throughput and duration. As an example, the frequency-based approach may involve calculating a frequency weight for each device based on the frequency of interactions with other nodes. This approach places more emphasis on the most communicated nodes. In contrast, the inverse frequency-based approach places less emphasis on the most communicated nodes, taking the inverse of the frequency of the most communicated nodes by each device. Once the weight vectors have been calculated for frequency-based embedding transformation, they are further normalized by multiplication by the weight vectors. Overall, the proposed approach aims to better represent device footprints and provide a more accurate and efficient prediction of their behavior in an IoT network.

As an example, consider an IoT network with devices A, B, and C. Assume there is bidirectional communications between nodes A and B and B and C and a one-directional communications from C to A. The communication events between these devices over time can be mapped as follows:

**Graph Representation:**

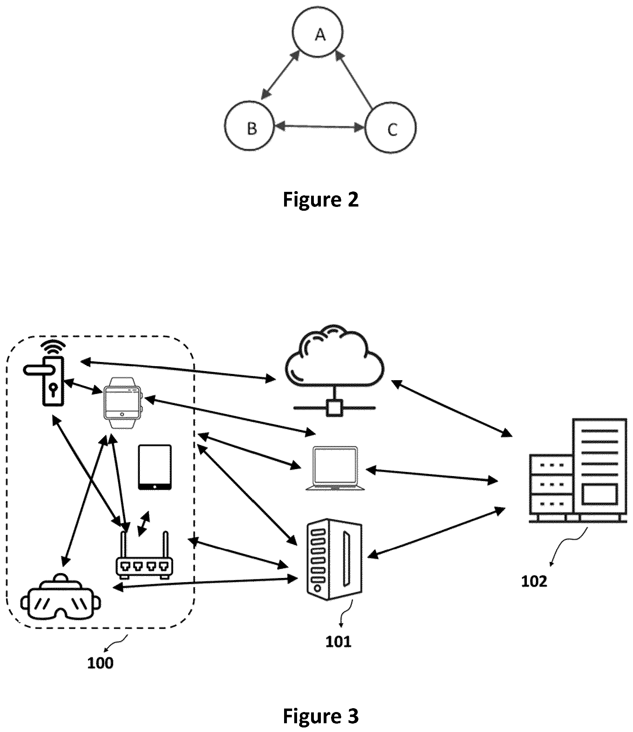

- Nodes: A, B, C (Figure 2),
- Edges: ($e_{AB}$, $e_{BA}$, $e_{BC}$, $e_{CB}$, $e_{CA}$),
- Edge attributes: Frequency, Data Volume, duration.

**Twistor Embedding:**

- Embedding: Represent the spatial coordinate of each node in the network as a twistor vector to obtain the twistor matrix, which is the embedding matrix of the network, $T_i$, at time $t_i$:

$$T_i = \begin{bmatrix} T_{i,A} \\ T_{i,B} \\ T_{i,C} \end{bmatrix}, \ 0 \leq i \leq N - 1$$

Here $T_{i,\alpha}^{0}$ represents the twistor vector of the spatial coordinates of node $\alpha$ at time $t_i$ (see previous example of how twistor matrix is obtained).

- Adjacency matrix: To represent the weights of the edges of the network at time $t_i$, create an adjacency matrix of the network at time $t_i$:

$$A_i = \begin{bmatrix} 0 & A_{i,AB} & A_{i,AC} \\ A_{i,BA} & 0 & A_{i,BC} \\ A_{i,CA} & A_{i,CB} & 0 \end{bmatrix}$$

Here $A_{i,\alpha\beta}$ represents the weight of the edge between nodes $\alpha$ and $\beta$ at time $t_i$. In this example this is the communications event data such as data volume, frequency of communication or throughput of communications between nodes $\alpha$ and $\beta$ at time $t_i$.

- Weighting: The twistor matrix of the network at time $t_i$ is then weighted using the adjacency matrix at time $t_i$ to obtain the weighted embedding matrix at time $t_i$. The weighted embedding matrix at time $t_i$ of this example network is obtained as follows:

$$T_i^{W} = \begin{bmatrix} T_{i,A} \\ T_{i,B} \\ T_{i,C} \end{bmatrix}^{T} \begin{bmatrix} 0 & A_{i,AB} & 0 \\ A_{i,BA} & 0 & A_{i,BC} \\ A_{i,CA} & A_{i,CB} & 0 \end{bmatrix}$$

- Normalization: The weighted embedding matrix is then normalized by first normalizing each embedding vector of node $\alpha$ at time $t_i$:

$$T_{i,\alpha,norm} = \frac{T_{i,\alpha}^{W}}{\|T_{i,\alpha}^{W}\|} = \frac{\left(T_{i,\alpha}^{0,W} \; T_{i,\alpha}^{1,W} \; T_{i,\alpha}^{2,W} \; T_{i,\alpha}^{3,W}\right)}{\sqrt{\left(\left|T_{i,\alpha}^{0,W}\right|^2 + \left|T_{i,\alpha}^{1,W}\right|^2 + \left|T_{i,\alpha}^{2,W}\right|^2 + \left|T_{i,\alpha}^{3,W}\right|^2\right)}}$$

The normalized embedding matrix is then denoted as:

$$T_{i,norm} = \begin{bmatrix} T_{i,A,norm} \\ T_{i,B,norm} \\ T_{i,C,norm} \end{bmatrix}$$

- Aging: To perform aging, the embedding matrix is multiplied by a scalar coefficient to obtain the aged and normalized embedding matrix as follows:

$$T_{i,norm}^{a} = a_i T_{i,norm}^{W} = \begin{bmatrix} a_i T_{i,A,norm} \\ a_i T_{i,B,norm} \\ a_i T_{i,C,norm} \end{bmatrix}$$

Here, $a_i$ is the aging coefficient at time $t_i$. The aging coefficient takes values as follows:

$$a_i = \frac{i}{N-1}, \; 0 \le i \le N - 1$$

- Dimensionality reduction: The aged and normalized embedding vectors may be converted into a lower dimension by applying methods such as projection, PCA or t-SNE. In this example, the four-dimensional twistor vector could be converted into a two-dimensional vector using the projection method as follows: Consider the projection matrix, $P$:

$$P = \begin{bmatrix} p_{1,1} & p_{1,2} & p_{1,3} & p_{1,3} \\ p_{2,1} & p_{2,1} & p_{2,2} & p_{2,3} \end{bmatrix}$$

The projected, normalized aged embedding vector of nodes is obtained as:

$$T_{i,\alpha}^{p,a} = P\, T_{i,\alpha,norm}^{a} =$$
$$\begin{bmatrix} p_{1,1} & p_{1,2} & p_{1,3} & p_{1,4} \\ p_{2,1} & p_{2,2} & p_{2,3} & p_{2,4} \end{bmatrix} \frac{\left(T_{i,\alpha,norm}^{0,a} T_{i,\alpha,norm}^{1,a} T_{i,\alpha}^{2,a}\, T_{i,\alpha}^{3,a}\right)}{\sqrt{\left(\left|T_{i,\alpha,norm}^{0,a}\right|^2 + \left|T_{i,\alpha,norm}^{1,a}\right|^2 + \left|T_{i,\alpha,norm}^{2,a}\right|^2 + \left|T_{i,\alpha,norm}^{3,a}\right|^2\right)}}$$

$$= \begin{bmatrix} a_i p_{1,1} T_{i,\alpha}^{0,a} + a_i p_{1,2} T_{i,\alpha,norm}^{1,a} + a_i p_{1,3} T_{i,\alpha,norm}^{2,a} + a_i p_{1,4} T_{i,\alpha,norm}^{3,a} \\ a_i p_{2,1} T_{i,\alpha,norm}^{0,a} + a_i p_{2,2} T_{i,\alpha,norm}^{1,a} + a_i p_{2,3} T_{i,\alpha,norm}^{2,a} + a_i p_{2,4} T_{i,\alpha,norm}^{3,a} \end{bmatrix}$$

Consider as another example an e-commerce application. We argue that this embedding approach offers an effective solution for predicting product preferences by analyzing online behaviors of e-commerce users. For instance, interaction data such as the frequency of page visits, viewed product categories, and time spent can be integrated into the embedding algorithm to identify users' preference patterns. This would enable platforms to provide personalized product recommendations and enhance customer satisfaction.

Frequency based weighting of embedding vectors takes into account the frequency of inter-device communications. Duration-based weighting of embedding vectors takes into account the duration that devices communicate with each other. Data volume-based weighting takes into account the data volume transmitted between nodes. Throughput-based weighting takes into account the throughput of data transmitted between nodes. By considering the duration, frequency and throughput of each device when communicating with other nodes, this can provide more precise information about device behavior.

The normalization process ensures that the resulting embedding vectors are properly scaled and optimized for accurate forecasting tasks.

In the aging phase, we offer a methodology that gives more weight to the users'/devices' more recent behavior. Using this approach, we implement a transformation to embed datasets that represent the device behaviors.

The prediction module collects embedding vectors to create an embedding vector for each datapoint e.g., user/device. This module takes into account all sessions belonging to a user/device and applies an aging coefficient to give more importance to recent sessions while reducing the importance of older sessions.

In addition, to further investigate the effectiveness of the aging-based embedding approach, the overall behavior is calculated by averaging the embedding vectors. This method creates user/device embedding vectors by taking the arithmetic average of all session embedding vectors, which represents each user's/device's overall behavior.

Embedding vectors for a specific space-time of a user / device are generated using the twistor-based embedding, then weighting, normalization and aging methods are applied. Then, user/device-based vectors are combined to represent the entire network of users/devices with an embedding matrix. The combination of all space-time events of a user/device embedding vectors represent the overall behavior of the user/device. This is done by calculating the average of all embedding vectors for each user/device of all space-time points, resulting in a user/device-based vector of N dimensions, where N is a time frame parameter that determines the size of the embedding vector. The user/device-based vectors obtained by this process are used as inputs for clustering algorithms to segment users/devices based on their behavior.

In the training phase, the labeled embedding dataset is split into training and test sets. ML algorithms are trained on the training dataset using generated customer embedding vectors to predict customer intent. ML algorithms such as Isolation Forest and XGBoost, etc., can be used to evaluate the performance of the framework. Isolation forest is an ML technique that is effective in detecting anomalies by assuming that samples moving away from the central dataset are anomalous. It uses random sampling to create binary trees and aggregates them to create a model for a given dataset. The main purpose of the Isolation Forest is to identify unusual instances that deviate from most of the data. For datasets are typically unbalanced, such as cybersecurity incident datasets or fraud in banking and financial datasets, ML algorithms such as Isolation Forest may be preferable [36]. XGBoost is a supervised ML algorithm that builds accurate models by creating many models in turn using boosting, with each model trying to address the weaknesses of the previous one. Tree strengthening is achieved by adding each model to the community as a decision tree. XGBoost is widely used in various industries due to its high accuracy and speed in large-scale and complex data analysis [29].

In this phase, the labeled embedded datasets are split into a training dataset (e.g., 80% of the data) and a test dataset (e.g., 20% of the data). Algorithms are trained on the training dataset to create ML models. These models are then validated using the test dataset. The output of this phase is the creation of ML models.

In the prediction phase, the generated ML models are used to predict the next user/device behavior. As an example, to what data elements that could be used for this purpose, consider an IoT network that has a dataset containing device footprints related to:

- Resource Consumption: Bandwidth and power usage.
- Data Generation: Patterns of data production and transmission.
- Network Communications: Frequency and volume of interactions with other nodes in the network.
- Security Actions: Authentication attempts, anomaly detection, and other security-related activities.
- Incident: Whether a cybersecurity incident occurred by the device.

In the proposed system, the data preprocessing phase consists of several steps. First, the duration of each communication in each session is calculated. If there are missing values, the average page time for sessions is calculated and used to replace null values.

In the embedding phase, the proposed twistor-based embedding method is used to create space-time representations for effectively capturing user/device behavior and intent in space-time. Weighting is performed to capture user or inter-device communication patterns, which may include factors such as frequency, throughput, data volume and duration. The embedding vectors are normalized using all twistor components. This results in normalized embedding vectors. Embedding methods are usually more efficient when applied in lower dimensions and can be used to increase the accuracy of user/device behavior prediction. Methods such as PCA and t-SNE could be utilized to reduce the dimension of the normalized embedding vectors.

**Software and Hardware Features of the Invention:**

The invention may be or may contain a system, method and/or computer program product. A computer program product may contain a computer-readable storage medium that has computer-readable program instructions on it to cause a processor to perform the features of the current invention.

Computer-readable storage media can be a tangible device that can store and store instructions for use by an instruction-execution device. Computer-readable storage media may be, but is not limited to, an electronic storage device, a magnetic storage device, an optical storage device, an electromagnetic storage device, a semiconductor storage device, or any appropriate combination of the above. A non-exhaustive list of more specific examples of computer-readable storage media includes: a portable computer floppy disk, a hard disk, a random access memory (205) (RAM), a read-only memory (205) (ROM), a erasable programmable read-only memory (205) (EPROM or Flash memory (205)), static random access memory (205) (SRAM), portable compact disk read-only memory (205) (CD ROM), digital versatile disc (DVD), a device such as a memory (205) stick, floppy disk and any suitable combination of the above. A computer-readable storage medium, as used herein, should not be construed as transient signals by itself. Such as radio waves or other freely propagating electromagnetic waves, electromagnetic waves emitted through a waveguide or other transmission media (e.g., pulses of light passing through a fiber optic cable), or electrical signals transmitted through a wire.

The computer-readable program instructions described herein may be downloaded from a computer-readable storage medium to the relevant computational/processing devices or to a network, such as the Internet, local area network, wide area network, and an external computer or external storage device, or send them over a wireless network. The network may include copper transmission cables, optical transmission fibers, wireless transmission, routers (101), firewalls, switches, gateway computers, edge and/or cloud servers (102). The network may be centralized or distributed. A network adapter card or network interface in each computing device receives computer-readable program instructions from the network and transmits computer-readable program instructions for storage on a computer-readable storage medium within that computing device.

It can be program instructions, installer instructions, instruction set architecture instructions, machine instructions, machine-dependent instructions, microcode, firmware instructions, status determination data, or source code or object that can be read by computer to perform operations of the present invention. It can include code written in any combination of one or more programming languages, including an object-oriented programming language such as Python, C++, or the "C" programming language or similar programming languages. Computer-readable program instructions may be executed entirely on the user's computer, partly on the user's computer, as a standalone software package, partly on the user's computer, and partly on a remote computer, or entirely on a remote computer or server (102). In the second scenario, the remote computer can connect to the user's computer through any type of network, including a local area network or a wide area network, or the connection can be made to an external computer. Data may be processed and/or stored on centralized databases, such as cloud servers (102), or distributed databases, such as in distributed ledgers. The program may be executed by a single computer or by multiple computers in parallel or in a distributed way, where the result of the computation may require a consensus of the nodes in the computer network, e.g., using distributed ledger technology. In some cases, the electronic circuit, including, for example, programmable logic circuitry, GPUs, FPGAs, High-Performance Computing (HPC) clusters or programmable logic arrays (PLAs), quantum computers can execute computer-readable program instructions using the status information of computer-readable program instructions.

**Functions Performed by the System;**

- Client (100) sends a request to connect to another client (100) or a server (102) via a router (101), e.g., to access services provided by the server (102) or to interact with different clients (100) in the network.
- Router (101) directs the client's (100) request to the server (102) or relevant client (100) in the network.

  ◦ If the request is sent to another client (100), the router (101) responds to the client (100) with the other client's (100) response. Router (101) may, e.g., periodically share network traffic data with the server (102), in which case the network activity received with a receiver device (217) and is monitored and logged by the server (102) using the monitoring and logging module (210). Data is stored in memory (205) and/or AI/ML database (204) of the server (102).
  ◦ If the request is transmitted to the server (102) for a service, the server (102) performs relevant processing and responds to the client (100) via the router (101) using its transmitter device (216). This may include user or device registration and/or verification using the verification module (215) and the user management module (211) and/or device management module (212). User, device and/or network data may be updated in AI/ML database (204), user database (202), device database (203) and/or memory (205), based on the transaction performed.

- The monitoring and logging module (210) periodically checks the newly available network data stored in the memory (205), AI/ML database (204), user database (202) and/or device database (203) to determine whether it is necessary to perform new data analysis using the data analytics module (208) on the user/device/network data. The module may work with rules engine (213) to access relevant rules regarding triggering a data analysis. This may, e.g., require a sufficient amount of new data availability or sufficient time to have elapsed from the previous analysis. In the case it is deemed necessary to perform a new data analysis, the monitoring and logging module (210) triggers a request to perform a data analysis to the data analytics module (208).
- Alternatively, an admin user may manually initiate a new data analysis request using the management module (218).
- The following actions are performed when a data analysis request is received at the data analytics module (208). The communications module (200) is utilized to enable communications between the relevant modules:

  ▪ Gather raw input data from the AI/ML database (204).
  ▪ Perform data pre-processing (data cleaning, data labelling, etc.) using the processing module (214).
  ▪ Covert input data into sequences and map network to a graph structure using the graph module (209).
  ▪ Perform embedding on pre-processed data using the embedding module (206).
  ▪ Perform weighting on embedding vectors using the weighting module (207).
  ▪ Normalize embedding vectors using the embedding module (206).
  ▪ Applying aging transformation using the weighting module (207).
  ▪ Optionally reduce dimensionality using the embedding module (206).
  ▪ Split the labelled embedded data set into training and test datasets using the data analytics module (208).
  ▪ Train the ML algorithms for predicting user/device actions using the embedding vectors using the data analytics module (208).
  ▪ Use the ML models to predict the user/device's next action using the data analytics module (208).

- The prediction results, new or updated ML models are stored in the relevant database (user database (202), device database (203), AI/ML database (204)) and/or memory (205). User data is updated in user database (202) using the user management module (211). Device data is updated using the device management module (212). Relevant rules may be updated in the rules engine (213). Relevant actions may be taken by the server (102) based on the prediction results and rules engine (213).

The business flow of the proposed embedding and prediction method is described below and in Figure 1;

- Receiving a data analysis request by data analytics module (208),
- Performing the following actions by utilizing communications module (200) to enable communications between the relevant modules by the data analytics module (208):

- Retrieving raw input data from an AI/ML database (204),
- Performing data pre-processing (data cleaning, data labelling, etc.) on the raw input data using a processing module (214),
- Converting input data into sequences and map network to a graph structure, including obtaining weights of edges, using a graph module (209),
- Performing embedding on pre-processed data using an embedding module (206),
- Performing weighting on the embedding vectors using a weighting module (207),
- Normalizing embedding vectors using an embedding module (206),
- Applying aging transformation using the weighting module (207),
- Optionally reducing dimensionality of the normalized embedding vectors using the embedding module (206),
- Splitting the labelled embedded data set into training and test datasets using the data analytics module (208) and storing the data in the AI/ML database (204),
- Training the ML algorithms using the training dataset for predicting user/device actions using the embedding vectors using the data analytics module (208),
- Using the ML models and test dataset to predict the user/device's next action using the data analytics module (208),

- Storing the prediction results, new or updated ML models and user/device profiles in the relevant database (User Database (202), Device Database (203), AI/ML Database (204)) and/or memory (205),
- Updating user profile data and user models in user database (202) using the user management module (211),
- Updating device profile data and device models using the device management module (212),
- Updating relevant rules may be in a rules engine (213),
- Taking relevant actions by the server (102) based on the prediction results and rules engine (213).

**References**

[1] N. Chitsazan, S. Sharpe, D. Katariya, Q. Cheng and K. Rajasethupathy, "Dynamic Customer Embeddings for Financial Service Applications," arXiv, 2021.

[2] B. Wang, A. Wang, F. Chen, Y. Wang and C.-C. Kuo, "Evaluating word embedding models: methods and experimental results," APSIPA Transactions on Signal and Information Processing, 2019.

[3] O. Levy and Y. Goldberg, "Neural Word Embedding as Implicit Matrix Factorization," Advances in Neural Information Processing Systems, pp. 2177-2185, 2014.

[4] B. Perozzi, R. Al-Rfou and S. Skiena, "Deepwalk: Online learning of social representations," in the 20th ACM SIGKDD International Conference on Knowledge Discovery and Data Mining, 2014.

[5] T. Mikolov, K. Chen, G. Corrado and J. Dean, "Efficient Estimation of Word Representations in Vector Space," arXiv, 2013.

[6] J. Pennington, R. Socher and C. Manning, "GloVe: Global Vectors for Word Representation," in the 2014 Conference on Empirical Methods in Natural Language Processing (EMNLP), Doha, Qatar, 2014.

[7] A. Narayanan, M. Chandramohan, R. Venkatesan, L. Chen, Y. Liu and S. Jaiswal, "Graph2vec: Learning Distributed Representations of Graphs," arXiv, 2017.

[8] A. Grover and J. Leskovec, "Node2vec: Scalable Feature Learning for Networks," in the 22nd ACM SIGKDD International Conference on Knowledge Discovery and Data Mining, 2016.

[9] L. F. Ribeiro, P. H. Saverese and D. R. Figueiredo, "Struc2vec: Learning Node Representations from Structural Identity," in the 23rd ACM SIGKDD International Conference on Knowledge Discovery and Data Mining, New York, NY, USA, 2017.

[10] S. Ghannay, B. Favre, Y. Esteve and N. Camelin, "Word Embeddings Evaluation and Combination," in the 2016 24th European Signal Processing Conference (EUSIPCO), 2016.

[11] L. Wu, I. E.-H. Yen, K. Xu, F. Xu, A. Balakrishnan, P.-Y. Chen, P. Ravikumar and M. J. Witbrock, "Word Mover's Embedding: From Word2Vec to Document Embedding," in Proceedings of the 32nd AAAI Conference on Artificial Intelligence (AAAI), Brussels, Belgium, 2018.

[12] B. Jang, I. Kim and J. W. Kim, "Word2Vec convolutional neural networks for classification of news articles and tweets," PLoS ONE, vol. 14, no. 8, 2019.

[13] M. Zuckerman and M. Last, "Using Graphs for Word Embedding with Enhanced Semantic Relations," in the 2019 Conference on Empirical Methods in Natural Language Processing and the 9th International Joint Conference on Natural Language Processing, Hong Kong, 2019.

[14] R. A. Rossi, R. Zhou and N. K. Ahmed, "Deep Inductive Graph Representation Learning," IEEE Transactions on Knowledge and Data Engineering, vol. 32, no. 3, pp. 438-452, 2020.

[15] I. Makarov, D. Kiselev, N. Nikitinsky and L. Subelj, "Survey on graph embeddings and their applications to machine learning problems on graphs," PeerJ Computer Science, vol. 6, p. 357, 2020.

[16] F. Salehi Rizi and M. Granitzer, "Properties of Vector Embeddings in Social Networks," Algorithms, vol. 10, no. 109, 2017.

[17] J. Li, J. Zhu and B. Zhang, "Discriminative Deep Random Walk for Network Classification," in the 54th Annual Meeting of the Association for Computational Linguistics (ACL), Berlin, Germany, 2016.

[18] M. Hou, J. Ren, D. Zhang, X. Kong, D. Zhang and F. Xia, "Network embedding: Taxonomies, frameworks and applications," Computer Science Review, vol. 38, pp. 45-52, 2020.

[19] N. Tasgetiren and M. S. Aktas, "Mining Web User Behavior: A Systematic Mapping Study," in the 22nd International Conference on Computational Science and Its Applications (ICCSA 2022), Malaga, Spain, 2022.

[20] M. Oz, C. Kaya, E. Olmezogullari and M. S. Aktas, "On the Use of Generative Deep Learning Approaches for Generating Hidden Test Scripts," International Journal of Software Engineering and Knowledge Engineering, vol. 31, no. 10, pp. 1447-1468, 2021.

[21] R. F. Oguz, M. Çınar, M. Kizilkaya and B. Turhan, "On the Use of Deep Learning Approaches for Extracting Information from Large Scale Graph Data: Case Study on Automated UI Testing," in Euro-Par 2021: Parallel Processing Workshops, 2021.

[22] Y. Uygun, O. Demirörs, M. Özkan and Ü. Doğan, "On the Large-scale Graph Data Processing for User Interface Testing in Big Data Science Projects," in 6th International Workshop to Improve Big Data Science Project Team Processes, 2020.

[23] I. Erdem, B. Çağlayan, B. Şen and Ö. Kılıç, "Test Script Generation Based on Hidden Markov Models Learning from User Browsing Behaviors," in IEEE International Conference on Big Data, 2021.

[24] E. Olmezogullari and M. Aktas, "Pattern2Vec: Representation of clickstream data sequences for learning user navigational behavior," in 6th High Performance Computing Conference (BASARIM 2020), 2022.

[25] E. Olmezogullari and M. Aktas, "Representation of Click-Stream DataSequences for Learning User Navigational Behavior by Using Embeddings," in 2020 IEEE International Conference on Big Data (Big Data), Atlanta, GA, USA, 2020.

[26] R. Penrose, "Twistor Algebra," Journal of Mathematical Physics, vol. 8, no. 2, pp. 345-366, 1967.

[27] R. Penrose and W. Rindler, "Spinors and Space-Time: Two-Spinor Calculus and Relativistic Fields, vol. 1," Cambridge University Press, 1984.

[28] R. Penrose and W. Rindler, "Spinors and Space-Time: Spinor and Twistor Methods in Space-Time Geometry, vol. 2", Cambridge University Press, 1986.

[29] R. Mitchell and E. Frank, "Accelerating the XGBoost algorithm using GPU computing," PeerJ Computer Science, vol. 3, 2017.

**Claims**

1. A system for developing an efficient embedding process that can effectively capture behavior for prediction purposes based on the space-time dynamics of user / device behavior in the network in an efficient way by utilizing twistor theory to represent user/device data in space-time and comprises employing the mathematical structure of twistors to encode space-time dependent information inside a higher-dimensional framework, and could be used in various use cases including, but not limited to, cybersecurity, banking and finance, e-commerce, healthcare, social networking, etc., including predicting future cybersecurity incidents by capturing behavior of IoT devices, capturing intent, or predicting a customer's propensity to use or purchase a product and **characterized by** comprising;

   - A client (100) that represents a user device, such as a computer, smartphone, or tablet and initiates requests for data or services from the network,
   - A server (102) that provides resources, data, or services to the client (100) and performs prediction of device / user behavior using the proposed embedding process,
   - A router (101) that directs data traffic between the client (100) and the server (102), ensures that data packets are sent to the correct destination and can also connect the network to other networks, such as the internet and based on capability and configuration, that can also perform the entirety or subset of the functionalities of the server (102),
   - Communications module (200) that responsible of all internal communications in the server (102),
   - Embedding database (201) in the server (102) that stores embedding data, including at least embedding matrices of the user, device and/or network and weighting data,
   - User database (202) in the server (102) that stores data related to the user, including at least user data, user profile and analysis models,
   - Device database (203) in the server (102) that stores all data related to the clients (100), including device profiles and analysis models, including at least device fingerprint data, device profile and analysis models,
   - A memory (205) that stores data related to activities performed in the system, including prediction, mapping of the graph to the network, network data and data analytics,
   - Embedding module (206) that performs all activities related to embedding of data, including applying the proposed twistor-based embedding technique to the pre-processed data to represent user/device behavior in a high-dimensional vector space, normalization of the embedding vectors, and dimensionality reduction of the embedding vectors,
   - Weighting module (207) that performs all weighting operations in the system, including for obtaining weighted embedding vectors during the embedding phase and for performing aging transformation on the on embedding datasets to give more weight to recent events/transactions/interactions, etc. representing the users'/devices' behaviors,
   - Data analytics module (208) that performs all data analytics activities in the system, including AI/ML model generation and analysis of user/device behavior,
   - Graph module (209) that employs graph theory to depict entities (including devices, data points, web pages, or user activities) as nodes, with the relationships or interactions among them shown as edges and determines the weights of the edges and stores them in the embedding database (201) and that generates directed graphs for the investigation and visualization of complex data flows and interconnections, e.g., of IoT networks and user navigational behavior,
   - Monitoring and logging module (210) that continuously monitors the system and logs data, includes multipoint (sensors distributed) online traffic monitoring in communications network, including IoT nodes and that logs data in a relevant database or memory (205),
   - AI/ML database (204) that used for the storage, management, and retrieval of substantial data volumes utilized in the training, testing, validation and deployment of AI/ML models and that enables efficient data processing, scalability, and integration with the monitoring and logging module (210) and data analytics module (208) to enhance advanced analytics and model creation,
- User management module (211) that facilitates the creation, modification, and deletion of user accounts, in addition to overseeing user authentication, authorization, and access control inside an application or network and that guarantees the secure and effective administration of user data and permissions and used for managing user profiles and models obtained with the data analytics module (208),
- Device management module (212) that responsible for the registration, configuration, monitoring, and maintenance of devices inside a network and guarantees that devices are effectively managed, updated, and secured, promoting seamless operation and communication inside the network and used for managing device profiles and models obtained with the data analytics module (208),
- Management module (218) that is used in managing the entire system by a network administrator via a user interface, including network configuration, device configuration, network access rights,
- Rules engine (213) that applies rules and policies applicable to user, devices, and network based on the configuration provided by the management module (218),
- Processing module (214) that performs all processing activities in the system, including data processing,
- Verification module (215) that performs all verification functionalities in the system including data verification, request verification, user identity, participant or device verification,
- Transmitter device (216) is a device (e.g., NFC/RFID reader, API gateway, IoT gateway, network router (101), switch, etc.) that transmits data to external systems,
- Receiver device (217) is a device (e.g., NFC/RFID reader, API gateway, IoT gateway, network router (101), switch, etc.) that receives external signals sent to the system.

2. A method for developing an efficient embedding process that can effectively capture behavior for prediction purposes based on the space-time dynamics of user / device behavior in the network in an efficient way by utilizing twistor theory to represent user/device data in space-time and comprises employing the mathematical structure of twistors to encode space-time dependent information inside a higher-dimensional framework, and could be used in various use cases including, but not limited to, cybersecurity, banking and finance, e-commerce, healthcare, social networking, etc., including predicting future cybersecurity incidents by capturing behavior of IoT devices, capturing intent, or predicting a customer's propensity to use or purchase a product and **characterized by** comprising the following process steps;

• Receiving a data analysis request by data analytics module (208),
• Performing the following actions by utilizing communications module (200) to enable communications between the relevant modules by the data analytics module (208):

- Retrieving raw input data from an AI/ML database (204),
- Performing data pre-processing (data cleaning, data labelling, etc.) on the raw input data using a processing module (214),
- Converting input data into sequences and map network to a graph structure, including obtaining weights of edges, using a graph module (209),
- Performing embedding on pre-processed data using an embedding module (206),
- Performing weighting on the embedding vectors using a weighting module (207),
- Normalizing embedding vectors using an embedding module (206),
- Applying aging transformation using the weighting module (207),
- Optionally reducing dimensionality of the normalized embedding vectors using the embedding module (206),
- Splitting the labelled embedded data set into training and test datasets using the data analytics module (208) and storing the data in the AI/ML database (204),
- Training the ML algorithms using the training dataset for predicting user/device actions using the embedding vectors using the data analytics module (208),
- Using the ML models and test dataset to predict the user/device's next action using the data analytics module (208),

• Storing the prediction results, new or updated ML models and user/device profiles in the relevant database (User Database (202), Device Database (203), AI/ML Database (204)) and/or memory (205),
• Updating user profile data and user models in user database (202) using the user management module (211),
• Updating device profile data and device models using the device management module (212),
• Updating relevant rules may be in rules engine (213),
• Taking relevant actions by the server (102) based on the prediction results and the rules engine (213).

**Figure 1**

**Figure 2**

**Figure 3**

## EUROPEAN SEARCH REPORT

**Application Number**

EP 24 22 3505

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAIDER SAMI AHMED ET AL: "Secure Artificial Intelligence for Precise Vehicle Behavior Prediction in 6G Consumer Electronics", IEEE TRANSACTIONS ON CONSUMER ELECTRONICS, IEEE SERVICE CENTER, NEW YORK, NY, US, vol. 70, no. 1, 4 March 2024 (2024-03-04), pages 3898-3905, XP011968816, ISSN: 0098-3063, DOI: 10.1109/TCE.2024.3369399 [retrieved on 2024-03-05] * figures 1, 2 * * sections III and V.B * ----- | 1 | INV. G06N5/022 G06N20/00 |
| X | US 2023/257003 A1 (MALEKMOHAMMADI SABER [CA] ET AL) 17 August 2023 (2023-08-17) * claims 1, 10 * * figures 2, 4, 9 * * paragraphs [0041], [0054], [0058], [0062] - [0075], [0087] - [0088], [0104] - [0106], [0123] * ----- | 2 | |
| | | | TECHNICAL FIELDS SEARCHED (IPC) G06N |

The present search report has been drawn up for all claims

| Place of search | Date of completion of the search | Examiner |
|---|---|---|
| The Hague | 6 June 2025 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3505

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2025

| Patent document cited in search report | Publication date | Patent family member(s) | | Publication date |
|---|---|---|---|---|
| US 2023257003 A1 | 17-08-2023 | CN | 117440908 A | 23-01-2024 |
| | | US | 2023257003 A1 | 17-08-2023 |
| | | WO | 2022087751 A1 | 05-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11106789 B2
- US 10880321 B2
- US 9998491 B2
- US 11716266 B2
- US 11031135 B2
- US 9990687 B1
- US 11227012 B2
- US 005646997 A
- US 20170270100 A1
- US 009659560 B2
- US 2012O310627 A1
- US 007620565 B2
- US 010489792 B2
- US 010909459 B2
- US 20200057946 A1
- US 011216510 B2
- US 010650311 B2
- US 11042922 B2
- US 11328221 B2
- US 20210201338 A1
- US 10755293 B2
- US 20230017304 A1
- US 009405348 B2
- US 20170214701 A1
- TR 2023006691

**Non-patent literature cited in the description**

- *Spinors and Space-Time: Two-Spinor Calculus and Relativistic Fields*, vol. 1
- *Spinors and Space-Time: Spinor and Twistor Methods in Space-Time Geometry*, vol. 2
- **N. CHITSAZAN ; S. SHARPE ; D. KATARIYA ; Q. CHENG ; K. RAJASETHUPATHY**. Dynamic Customer Embeddings for Financial Service Applications. *arXiv*, 2021
- **B. WANG ; A. WANG ; F. CHEN ; Y. WANG ; C.-C. KUO**. Evaluating word embedding models: methods and experimental results. *APSIPA Transactions on Signal and Information Processing*, 2019
- **O. LEVY AND Y. GOLDBERG**. Neural Word Embedding as Implicit Matrix Factorization. *Advances in Neural Information Processing Systems*, 2014, 2177-2185
- **B. PEROZZI ; R. AL-RFOU ; S. SKIENA**. Deepwalk: Online learning of social representations. *20th ACM SIGKDD International Conference on Knowledge Discovery and Data Mining*, 2014
- **T. MIKOLOV ; K. CHEN ; G. CORRADO ; J. DEAN**. Efficient Estimation of Word Representations in Vector Space. *arXiv*, 2013
- **J. PENNINGTON ; R. SOCHER ; C. MANNING**. GloVe: Global Vectors for Word Representation. *2014 Conference on Empirical Methods in Natural Language Processing (EMNLP), Doha, Qatar*, 2014
- **A. NARAYANAN ; M. CHANDRAMOHAN ; R. VENKATESAN ; L. CHEN ; Y. LIU ; S. JAISWAL**. Graph2vec: Learning Distributed Representations of Graphs. *arXiv*, 2017
- **A. GROVER ; J. LESKOVEC**. Node2vec: Scalable Feature Learning for Networks. *22nd ACM SIGKDD International Conference on Knowledge Discovery and Data Mining*, 2016
- **L. F. RIBEIRO ; P. H. SAVERESE ; D. R. FIGUEIREDO**. Struc2vec: Learning Node Representations from Structural Identity. *23rd ACM SIGKDD International Conference on Knowledge Discovery and Data Mining, New York, NY, USA*, 2017
- **S. GHANNAY ; B. FAVRE ; Y. ESTEVE ; N. CAMELIN**. Word Embeddings Evaluation and Combination. *2016 24th European Signal Processing Conference (EUSIPCO)*, 2016
- **L. WU ; I. E.-H. YEN ; K. XU ; F. XU ; A. BALAKRISHNAN ; P.-Y. CHEN ; P. RAVIKUMAR ; M. J. WITBROCK**. Word Mover's Embedding: From Word2Vec to Document Embedding. *Proceedings of the 32nd AAAI Conference on Artificial Intelligence (AAAI), Brussels, Belgium*, 2018
- **B. JANG ; I. KIM ; J. W. KIM**. Word2Vec convolutional neural networks for classification of news articles and tweets. *PLoS ONE*, 2019, vol. 14 (8)
- **M. ZUCKERMAN ; M. LAST**. Using Graphs for Word Embedding with Enhanced Semantic Relations. *2019 Conference on Empirical Methods in Natural Language Processing and the 9th International Joint Conference on Natural Language Processing, Hong Kong*, 2019
- **R. A. ROSS ; R. ZHOU ; N. K. AHMED**. Deep Inductive Graph Representation Learning. *IEEE Transactions on Knowledge and Data Engineering*, 2020, vol. 32 (3), 438-452

- **I. MAKAROV** ; **D. KISELEV** ; **N. NIKITINSKY** ; **L. SUBELJ**. Survey on graph embeddings and their applications to machine learning problems on graphs. *PeerJ Computer Science*, 2020, vol. 6, 357
- **F. SALEHI RIZI AND M. GRANITZER**. Properties of Vector Embeddings in Social Networks. *Algorithms*, 2017, vol. 10 (109)
- **J. LI** ; **J. ZHU** ; **B. ZHANG**. Discriminative Deep Random Walk for Network Classification. *54th Annual Meeting of the Association for Computational Linguistics (ACL), Berlin, Germany*, 2016
- **M. HOU** ; **J. REN** ; **D. ZHANG** ; **X. KONG** ; **D. ZHANG** ; **F. XIA**. Network embedding: Taxonomies, frameworks and applications. *Computer Science Review*, 2020, vol. 38, 45-52
- **N. TASGETIREN** ; **M. S. AKTAS**. Mining Web User Behavior: A Systematic Mapping Study. *22nd International Conference on Computational Science and Its Applications (ICCSA 2022), Malaga, Spain*, 2022
- **M. OZ** ; **C. KAYA** ; **E. OLMEZOGULLARI** ; **M. S. AKTAS**. On the Use of Generative Deep Learning Approaches for Generating Hidden Test Scripts. *International Journal of Software Engineering and Knowledge Engineering*, 2021, vol. 31 (10), 1447-1468
- **E. OLMEZOGULLARI** ; **M. AKTAS**. Pattern2Vec: Representation of clickstream data sequences for learning user navigational behavior. *6th High Performance Computing Conference (BASARIM 2020)*, 2022
- **E. OLMEZOGULLARI** ; **M. AKTAS**. Representation of Click-Stream DataSequences for Learning User Navigational Behavior by Using Embeddings. *2020 IEEE International Conference on Big Data (Big Data), Atlanta, GA, USA*, 2020
- **R. PENROSE**. Twistor Algebra. *Journal of Mathematical Physics*, 1967, vol. 8 (2), 345-366
- **R. PENROSE AND W. RINDLER**. Spinors and Space-Time: Two-Spinor Calculus and Relativistic Fields. Cambridge University Press, 1984, vol. 1
- **R. PENROSE AND W. RINDLER**. Spinors and Space-Time: Spinor and Twistor Methods in Space-Time Geometry. Cambridge University Press, 1986, vol. 2
- **R. MITCHELL AND E. FRANK**. Accelerating the XGBoost algorithm using GPU computing. *PeerJ Computer Science*, 2017, vol. 3